# EUROPEAN PATENT SPECIFICATION

(11) **EP 3 023 270 B1**
(45) Date of publication and mention of the grant of the patent: **27.06.2018**
(21) Application number: 14825799.1
(22) Date of filing: 15.07.2014
(51) Int. Cl.: B60C 15/06, B60C 9/02, B60C 9/14, B60C 9/04, B60C 11/00, B60C 3/04, B60C 13/00, B60C 9/28, B60C 15/00, B60C 9/08, B60C 9/18

(54) **TIRE**
REIFEN
PNEU

(30) Priority: 17.07.2013 JP 2013148412
(43) Date of publication of application: 25.05.2016
(73) Proprietor: Bridgestone Corporation, Tokyo 104-8340 (JP)
(72) Inventor: TANIGUCHI, Hisashi, Tokyo 104-8340 (JP)
(74) Representative: Oxley, Robin John George
(86) International application number: PCT/JP2014/068795
(87) International publication number: WO 2015/008752

(56) References cited:
- EP-A1- 2 127 912
- EP-A1- 2 196 329
- JP-A- 2003 237 322
- JP-A- 2009 001 073
- JP-A- 2010 247 705
- JP-A- 2011 025 823
- JP-A- 2011 037 339
- JP-A- 2013 023 122

## Description

### Technical Field

The present invention relates to a tire.

### Background Art

There has been provided a tire that is improved in steering stability by increasing the stiffness of the tire side portion (refer to Patent Literature 1, for example). The tires of Patent Literature 1 and Patent Literature 2 have a pair of bead cores, one carcass layer that spans between the pair of right and left bead cores, and reinforcing rubber layers interposed between the carcass layer and the sidewall portions. The reinforcing rubber layer of Patent Literature 1 is formed of a rubber with a larger rubber hardness than that of the sidewall portions. The tire of Patent Literature 3 has a vehicle inner side bead filler sheet and a vehicle outer side bead filler sheet, wherein the height of the vehicle inner side bead filler sheet is larger than the height of the vehicle outer side bead filler sheet.

### Citation List

### Patent Literature

Patent Literature 1: JP 2009-1073 A
Patent Literature 2: EP 2196329 A1
Patent Literature 3: EP 2127912 A1 discloses the preamble of claim 1

### Summary of Invention

In the tire of Patent Literature 1, the reinforcing rubber layers that reinforce the carcass layer are required to increase the tire stiffness to improve the steering stability. However, there has recently been a demand for further improvement in steering stability. Ways to further enhance the steering stability include increasing the tire stiffness by increasing the thickness of the carcass layer that constitutes the tire or by upsizing the bead filler. The increase in the thickness of the carcass layer that constitutes the tire or in the size of the bead filler, however, increases the weight of the tire to possibly deteriorate the rolling resistance.

The present invention has been made in view of the circumstances, and aims to provide a tire that enhances the steering stability while inhibiting the deterioration of the rolling resistance.

A tire according to the present invention includes a tread portion in contact with a road surface, a pair of bead portions each including a bead core and a bead filler, sidewall portions extending between the bead portions and the tread portion, a carcass layer folded back around the bead cores and extending in a toroidal shape between the bead portions, a belt layer arranged outwardly of the carcass layer in a tire radial direction, the belt layer reinforcing the tread portion, and reinforcing layers arranged adjacent to the carcass layer on a tread widthwise outer or inner side of the carcass layer, the reinforcing layer reinforcing the sidewall portion. The carcass layer includes a body ply portion extending from the tread portion to the bead cores and folded-back ply portions each folded back around the corresponding bead core. An end portion of each folded-back ply portion extends beyond a tire maximum width height. A height of the bead filler is 30% or less of a tire cross-sectional height. A tire radial inner end portion of each of the reinforcing layers is positioned inwardly, in the tire radial direction, of a tire radial outer end portion of the bead filler. In a cross section taken along the tread width direction of the tire and taken orthogonally to a tire circumferential direction, a maximum thickness of each of the reinforcing layers is smaller than a maximum thickness of the bead filler. A tread width, a length of the tread portion in the tread width direction, is 81% or more of a tire maximum width. In the cross section taken along the tread width direction of the tire and taken orthogonally to the tire circumferential direction, a radius of curvature of the carcass layer on an extended line extending in the tread width direction through a tire maximum width position is in a range of 30 mm to 40 mm. The tread portion includes a plurality of circumferential grooves, land portions within a central region between shoulder circumferential grooves, and a shoulder land portion positioned outwardly of an outermost shoulder circumferential groove, wherein a lug groove included in the tread portion is arranged in the shoulder land portion and the lug groove is configured not to open to the circumferential groove, wherein the lug groove is not formed in land portions within a central area between the shoulder circumferential grooves, and wherein a siping with a groove width of 1 mm or less is used in the land portions within the central region.

According to the features of the present invention, a tire that enhances the steering stability while inhibiting the deterioration of the rolling resistance is provided. Brief Description of Drawings

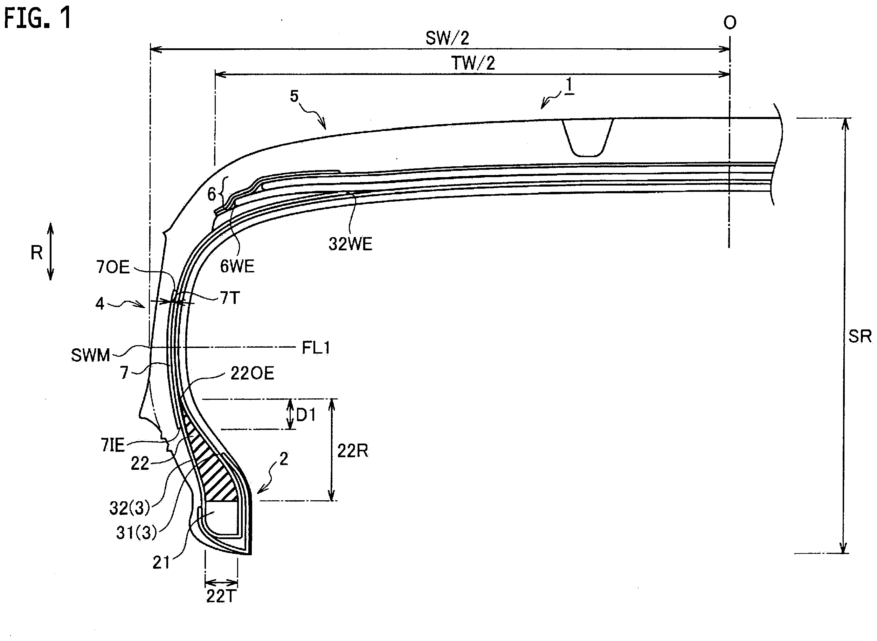

Fig. 1 is a schematic cross-sectional view of a tire according to an embodiment, illustrating a part of a cross section taken along a tread width direction and taken orthogonally to a tire circumferential direction.

### Description of Embodiments

Next, a description will be made on an embodiment and comparative evaluations of a tire according to the present invention, with reference to the drawing. Fig. 1 partially shows a cross-sectional view of the tire according to the embodiment taken orthogonally to the tire circumferential direction and along the tire width direction. Here, the tire has a symmetrical structure about an equatorial plane O, so Fig. 1 only shows one half of the cross section divided by the equatorial plane O. In the following description of the drawing, the same or similar parts are labeled with the same or similar reference characters. It should be noted however that the illustration is merely schematic and not drawn to scale.

Therefore, specific dimensions and the like should be determined in consideration of the following description. Moreover, the drawings also include portions having different dimensional relationships and ratios from each other in some cases.

### (1) General configuration of tire

A tire 1 includes a pair of bead portions 2, sidewall portions 4, and a tread portion 5.

The pair of bead portions 2 each include a bead core 21 and a bead filler 22. The bead portions 2 are configured to contact a rim at their inner sides in a tire radial direction R. A height 22R of the bead filler 22 is 30% or less of a tire cross-sectional height SR. More preferably, the height 22R of the bead filler 22 is 25% or less of the tire cross-sectional height SR. Also, the height 22R of the bead filler 22 is preferably 5% or more of the tire cross-sectional height SR.

The tire cross-sectional height SR means a length of the tire in the radial direction under conditions of the normal internal pressure filled and no load, that is, a tire maximum height at the normal internal pressure filled and no load. The tire maximum height means a distance from a bottom surface of the bead portion to a tread surface at the tire equatorial plane position in the tire radial direction. Here, the bead bottom surface is defined as, among the bottom surface of the bead, a bottom surface of the bead heel portion positioned at a tire widthwise outer portion. The height 22R of the bead filler means a radial length of the bead filler.

Here, the normal internal pressure as used in the present invention, means a "maximum air pressure" specified in JATMA, a maximum value described in the "TIRE LOAD LIMITS AT VARIOUS COLD INFLATION PRESSURES" specified in TRA, or the "INFLATION PRESSURES" specified in ETRTO.

A carcass layer 3 extends in a toroidal shape between the pair of bead cores 21. The carcass layer 3 is arranged between the bead cores 21 and has a body ply portion 31 extending from the tread portion to the bead cores and folded-back ply portions 32 each of which is folded back around the corresponding bead core 21 outwardly in the tire radial direction in the bead portions 2.

The tread portion 5 includes a ground contact surface that comes into contact with a road surface. The tread portion 5 is provided on the tire radial inner side with a belt layer 6 that reinforces the tread portion 5. The belt layer 6 is constituted of an inclined belt layer including steel fibers inclined against the tire circumferential direction and a circumferential belt layer including organic fibers extending in the tire circumferential direction.

A part of the belt layer 6 overlaps with a part of each folded-back ply. More specifically, as shown in Fig. 1, an end portion 32WE of each folded-back ply portion 32 is extended to the tire radial inner side of the inclined belt layer of the belt layer 6, and at the same time, arranged inwardly, in the tread width direction, of a tread width direction end portion 6WE of the inclined belt layer.

The end portion of the folded-back ply portion 32, however, is not limited to this form, and enough side stiffness can be obtained when the end portion extends at least beyond the tire maximum width height outwardly in the tire radial direction. The end portion is preferably extended to the end portion of the belt layer as described above.

Each sidewall portion 4 leads to the radial outer side of the corresponding bead portion 2. The sidewall portion 4 extends between the bead portion 2 and the tread portion 5. The sidewall portion 4 is provided with a reinforcing rubber layer 7, one of reinforcing layers. The reinforcing rubber layer 7 is arranged outwardly of the carcass layer 3 in the tread width direction.

The reinforcing rubber layer 7 is arranged adjacent to the carcass layer 3 on the tread widthwise outer or inner side. The provision of the reinforcing rubber layer 7 enhances the stiffness of the sidewall portion 4 and the carcass layer 3. When using a reinforcing cord layer instead of the reinforcing rubber layer 7, the reinforcing cord layer is required to be arranged adjacent to the carcass layer 3, and preferably positioned between the carcass layer 3 and the bead filler 22.

The reinforcing rubber layer 7 overlaps with the bead filler 22 in the tire radial direction. More specifically, a tire radial inner end portion 7IE of the reinforcing rubber layer 7 is positioned inwardly, in the tire radial direction, of a tire radial outer end portion 22OE of the bead filler 22. A length D1 in the tire radial direction between the tire radial direction R inner end portion 7IE of the reinforcing rubber layer 7 and the tire radial direction R outer end portion 22OE of the bead filler 22 is preferably 10 mm or less. A tire radial outer end portion 7OE of the reinforcing rubber layer 7 is positioned outwardly, in the tire radial direction, of a tire maximum width position SWM at which the tire is longest in the tread width direction. Further, a length of the reinforcing rubber layer 7 in the tire radial direction is less than 40% of the tire cross-sectional height.

In the embodiment, a reinforcing cord layer may be used instead of the reinforcing rubber layer 7. Here, the reinforcing cord layer is made by a rubber covered cord layer formed from an organic fiber such as polyethylene terephthalate (PET), polyethylene naphthalate (PEN), or a nylon. When using such a reinforcing cord layer, the reinforcing cord layer can enhance the stiffness when it is inclined against the tire radial direction, and can ensure enough stiffness even when it is not extended to the maximum width position. In terms of the rolling resistance, the reinforcing rubber layer 7 is preferably used.

The tire maximum width position SWM is a tread widthwise outer end portion of the tire. The tire maximum width position SWM, at which the tire is longest in the tread width direction, is a maximum width at the normal internal pressure filled and no load, and is a maximum width position of an imaginary outer contour including neither a rim guard nor raised letters.

The rubber hardness of the reinforcing rubber layer 7 is made higher than that of the sidewall portion 4. Preferably, the rubber hardness of the reinforcing rubber layer 7 is substantially equivalent to that of the bead filler 22.

In the cross section taken along the tread width direction of the tire and taken orthogonally to the tire circumferential direction (the cross section shown in Fig. 1), a radius of curvature of the carcass layer 3 on an extended line FL1 extending in the tread width direction through the tire maximum width position SWM is in a range of 30 mm to 40 mm. The radius of curvature is that of the carcass layer 3 in the cross section shown in Fig. 1. The radius of curvature is that obtained at the normal internal pressure filled and no load.

The radius of curvature is preferably in the numerical range above within about 5% of the tire cross-sectional height from the tire maximum width position SWM inwardly and outwardly in the tire radial direction.

The reinforcing rubber layer 7 is configured to be thinner than the bead filler 22. More specifically, in the cross section shown in Fig. 1, a maximum thickness 7T of the reinforcing rubber layer 7 is thinner than a maximum thickness 22T of the bead filler 22. The reinforcing rubber layer 7 is preferably thinner than the side wall rubber, so that it can reinforce the sidewall portion while suppressing the rolling resistance.

A tread width TW, that is a length of the tread portion in the tread width direction, is 81% or more of a tire maximum width SW. Further, the tread width TW is preferably 95% or less of the tire maximum width SW. The tread width TW means a distance between tread end portions in the tread width direction. The tread end portions are, at a corner portion on the tire circumferential surface between the tread portion and each sidewall portion, an intersection of a tangent at the tire circumferential surface of the corner portion close to the tread portion and a tangent at the tire circumferential surface of the corner portion close to the sidewall portion. Here, each corner portion is generally formed in an arc shape with the smallest radius of curvature within the portion between the tread and the side. The tread width is a length of the tread in its width direction at the normal internal pressure filled and no load. The tire maximum width SW is a maximum width of the tire at the normal internal pressure filled and no load, and also a maximum width of the side outer contour including neither a rim guard nor raised letters.

The tread portion 5 (the tread ground contact surface) includes a plurality of circumferential grooves as a tread pattern and also a lug groove at least on an inner shoulder land portion positioned outwardly of an outermost shoulder circumferential groove that is on the inner side in the vehicle mounting direction, and the lug groove is not opened to the circumferential groove (the main groove) and extend beyond a ground contact end. Further, land portions within the central area between the shoulder circumferential grooves have no lug grooves that cross the land portions. The land portions may have a lug groove with an end terminated within the land portion, for it ensures drainage while maintaining the stiffness of the land portion.

The tire of the present invention, which has the tread width that is as wide as 81% or more of the tire maximum width, is likely to add more load to the tire shoulder land portions. However, because the lug groove is arranged that is not opened to the circumferential groove, on the inner shoulder land portion that is subjected to a load such as when the tire has a negative camber as in the foregoing, the tire ensures the drainage while maintaining enough stiffness, thereby making the tire favorable. It is to be noted that although the outer shoulder land portion positioned on the outer side when the tire is mounted to the vehicle may include a lug groove that opens to the circumferential main groove, in that case, the lug groove includes a raised bottom portion at the position it opens to the main groove for ensuring the stiffness.

### (2)Operation/effect

The stiffness of the sidewall portion 4 and the carcass layer 3 can be increased to improve the steering stability by providing the reinforcing rubber layer 7 and arranging the folded-back ply portion 32 such that its tread widthwise end portion 32WE overlaps with the belt layer 6. Also, the bead filler 22, whose height 22R is 30% or less of the tire cross-sectional height SR, has a small volume relative to the entire tire. The bead filler 22 can be reduced in weight to thereby reduce the weight of the tire. Further, the provision of the reinforcing rubber layer 7 whose maximum thickness is smaller than that of the bead filler 22 allows the bead filler 22 to maintain the stiffness even when the bead filler 22 is reduced in volume. Thus, the tire can maintain the stiffness while being reduced in volume.

When a lateral force is applied such as during high-speed cornering, the sidewall portion is particularly subjected to deformation due to strain. In that case, when the radius of curvature of the carcass layer 3 on the extended line FL1 extending in the tread width direction through the tire maximum width position SWM is 30 mm or more, the deformation can be received by the entire sidewall portion 4. On the other hand, when the radius of curvature of the carcass layer 3 on the extended line extending in the tread width direction through the tire maximum width position SWM is less than 30 mm, the tension of the cord constituting the carcass layer 3 cannot be increased, possibly causing a local deformation within the sidewall portion 4. When the sidewall portion 4 is locally deformed, the strain concentrates on the deformed part, which might deteriorate the rolling resistance or the steering stability. Since the radius of curvature of the carcass layer 3 on the extended line extending in the tread width direction through the tire maximum width position SWM, however, is 30 mm or more, the local deformation of the sidewall portion is suppressed to thereby suppress the deterioration of the rolling resistance or the steering stability.

Since the tire radial inner end portion of the reinforcing rubber layer 7 is positioned inwardly, in the tire radial direction, of the tire radial outer end portion of the bead filler 22, the reinforcing rubber layer 7 overlaps with the bead filler 22 to hardly form stiffness differences, thereby suppressing the local deformation and the deterioration of the steering stability. Also, the length of the reinforcing rubber layer 7 in the tire radial direction is less than 40% of the tire cross-sectional height, so that this prevents an increase in the weight of the tie while maintaining the contribution to the operability, thereby improving the fuel efficiency (RR).

When the height 22R of the bead filler 22 accounts for an excessive proportion in the tire cross-sectional height (e.g., when the height of the bead filler is more than 30% of the tire cross-sectional height), the strain might concentrate in the vicinity of a tire radial end portion of the bead filler. The height of the bead filler, however, is 30% or less of the tire cross-sectional height, so that this suppresses the concentration of the strain in the vicinity of the tire radial end portion of the bead filler. Further, the sidewall portion 4 has the reinforcing rubber layer 7 arranged therein, so that the reinforcing rubber layer 7 also suppresses the strain. Thus, the strain is relieved by the entire sidewall portion 4.

When the ratio of the tread width TW to the tire maximum width SW is too small (e.g., the tread width is less than 81% of the tire maximum width), the wear performance of the tread portion 5 might be deteriorated. The tread width TW, however, is 81% or more of the tire maximum width SW, thereby ensuring the wear performance.

In particular, the wider the tread width TW is, the greater the radial difference tends to be between the center and portions close to the end portions of the tire, easily causing shoulder wear due to a skid in the region close to the tread width TW direction outer ends. Then, the lug groove is arranged in the shoulder land portion to thereby reduce the tire stiffness and obtain an extra ground contact length, and at the same time, the lug groove is configured not to open to the circumferential groove to thereby suppress an excessively small radial difference in the vicinity of the end portions of the tire to prevent uneven wear. In addition, the lug groove is not formed in the land portions within the central region between the shoulder circumferential grooves, thereby further suppressing the excessively small radial difference in the vicinity of the end portions of the tire to prevent uneven wear. A siping with a groove width of 1 mm or less may be used in the land portions within the central region for it hardly exerts the foregoing influence.

As described above, the tire of the embodiment can suppress the strain of the sidewall portion while reducing the weight of the entire tire, and can enhance the steering stability while suppressing the deterioration of the rolling resistance.

The height of the bead filler 22 is preferably 5% or more of the tire cross-sectional height from the viewpoint of ensuring the stiffness of the sidewall portion 4 and the steering stability.

The tread width TW is desirably 95% or less of the tire maximum width SW. For example, when the tread width TW is more than 95% of the tire maximum width, the strain concentrates on the shoulder portion, an interface between the tread portion and the sidewall portion, to generate great heat at the tread portion, thereby possibly decreasing the rolling resistance. The tread width, however, is 95% or less of the tire maximum width, and thus this suppresses the concentration of the strain to suppress the decrease in the rolling resistance.

The carcass layer 3 is preferably formed of one layer. Then, the tire can be reduced in weight compared with a tire including a carcass layer 3 formed of a plurality of layers. The inclination angle of the cord constituting the carcass layer 3 and the tread width direction W is preferably 20 degrees or less. The inclination angle of the cord constituting the carcass layer 3 and the tread width direction is larger than 0 degrees (which means the cord is inclined) and 20 degrees or less, so that the stiffness of the carcass layer 3 is ensured. On the other hand, when the inclination angle of the cord constituting the carcass layer 3 and the tread width direction is excessively large (larger than 20 degrees), the carcass layer 3 becomes excessively stiff. Thus, according to the configuration, the carcass layer 3 is reduced in weight to thereby suppress the rolling resistance, and at the same time, the stiffness of the carcass layer 3 is ensured to thereby improve the steering stability.

The length D1 in the tire radial direction between the tire radial inner end portion 7IE of the reinforcing rubber layer 7 and the tire radial outer end portion 22OE of the bead filler 22 is preferably 10 mm or less. The stiffness of the sidewall portion and the carcass layer 3 can be enhanced to improve the steering stability by overlapping the tire radial inner end portion of the reinforcing rubber layer 7 with the tire radial outer end portion of the bead filler 22. The effect can be obtained when the length in the tire radial direction between the tire radial inner end portion of the reinforcing rubber 7 layer and the tire radial outer end portion of the bead filler 22 is 1 to 10 mm. The effect of the steering stability is not significantly improved even when the length in the tire radial direction between the tire radial inner end portion of the reinforcing rubber layer 7 and the tire radial outer end portion of the bead filler 22 is more than 10 mm. When the length in the tire radial direction between the tire radial inner end portion of the reinforcing rubber layer 7 and the tire radial outer end portion of the bead filler 22 is excessively long, the tire is increased in weight. As a result, the length in the tire radial direction between the tire radial inner end portion of the reinforcing rubber layer 7 and the tire radial outer end portion of the bead filler 22 is preferably 10 mm or less.

In the cross section taken along the tread width direction of the tire and taken orthogonally to the tire circumferential direction, the radius of curvature of the carcass layer 3 on the extended line extending in the tread width direction through the tire maximum width position SWM is in the range of 30 mm to 40 mm. When the radius of curvature of the carcass layer 3 exceeds 60 mm, the tire can be greatly strained toward the tire radial outer or inner side of the tire maximum width position SWM. When the radius of curvature of the carcass layer 3, however, is 60 mm or less, the strain can be received at the entire sidewall portion in a well-balanced manner, thereby suppressing the local strain. In the cross section taken along the tread width direction of the tire and taken orthogonally to the tire circumferential direction, the radius of curvature of the carcass layer 3 on the extended line extending in the tread width direction through the tire maximum width position SWM is in the range of 30 mm to 40 mm.

The height 22R of the bead filler 22 is desirably 25% or less of the tire cross-sectional height SR. When the ratio of the bead filler 22 height to the tire cross-sectional height is too high, the tire cannot be reduced in weight, making it difficult to improve both the steering stability and the rolling resistance. The height of the bead filler 22, however, is 25% or less of the tire cross-sectional height, thereby reducing the weight of the tire and further improving both the steering stability and the rolling resistance.

Next, evaluations were made to compare examples and comparative examples for verifying the effect of the present invention. Tires according to Examples 1 to 14 and Comparative Examples 1 to 4 were evaluated for steering stability performance and rolling resistance performance.

The tires according to Examples 1 to 14 and Comparative Examples 1 to 4 each have a size of 225/45R17, a rim width of 8J, and a tire inner pressure of 240 kPa. The tires were evaluated as mounted on a vehicle (BMW325i). In each of the tires according to Examples 1 to 14 and Comparative Examples 1 to 4, the end portion of the folded-back ply portion of the carcass layer extends to the tread widthwise inner side of the belt layer beyond its tread widthwise outer end portion. The other conditions are shown in Table 1. The comparative evaluations were made with reference to the tire of Comparative Examples 1, tanking the steering stability performance and the rolling resistance performance of the tire of Comparative Example 1 as 100. As for the steering stability, a test driver made test runs with the tires mounted on the vehicle to evaluate them by feeling. Also, as for the rolling resistance performance, each tire was assembled to the rim, which is then mounted to a rolling resistance test drum, and rolling resistance values were measured at the normal load and a predetermined test speed (80 km/h), evaluating the rolling resistance performance.

| Example | | | | | Comparative Example | | | | |
|---|---|---|---|---|---|---|---|---|---|
| 10 | 11 | 12 | 13 | 14 | 1 | 2 | 3 | 4 | |
| 25 | 25 | 25 | 25 | 25 | 35 | 25 | 25 | 25 | |
| 85 | 85 | 85 | 85 | 85 | 85 | 80 | 85 | 85 | |
| 40 | 50 | 6 | 70 | 33 | 33 | 33 | 27 | 33 | |
| 2 | 2 | 2 | 2 | 1 | 2 | 2 | 2 | 2 | |
| Absent | Absent | Absent | Absent | Present | Absent | Absent | Absent | Absent | |
| Present | Present | Present | Present | Present | Present | Present | Present | Absent | |
| 102 | 102 | 102 | 101 | 102 | 100 | 97 | 98 | 97 | |
| 104 | 103 | 102 | 101 | 108 | 100 | 102 | 101 | 102 | |

| | | | | | | | | | |
|---|---|---|---|---|---|---|---|---|---|
| | 1 | 2 | 3 | 4 | 5 | 6 | 7 | 8 | 9 |
| 22R/SR | 25 | 30 | 20 | 25 | 25 | 25 | 25 | 25 | 25 |
| TW/SW | 85 | 85 | 85 | 81 | 90 | 95 | 97 | 85 | 85 |
| Radius of Curvature | 33 | 33 | 33 | 33 | 33 | 33 | 33 | 30 | 37 |
| Number of Carcass | 2 | 2 | 2 | 2 | 2 | 2 | 2 | 2 | 2 |
| Existence of inclination of Cords | Absent | Absent | Absent | Absent | Absent | Absent | Absent | Absent | Absent |
| Existence of Reinforcing Rubber Layer | Present | Present | Present | Present | Present | Present | Present | Present | Present |
| steering stability performance | 102 | 101 | 102 | 102 | 102 | 101 | 101 | 102 | 102 |
| Rolling Resistance Performance | 104 | 103 | 104 | 104 | 103 | 102 | 101 | 104 | 104 |

The results of the evaluations show it is desirable the tire adopt the following configurations for enchancing the steering stability performance and rolling resistance whille suppressing the deterioration of the rolling resistance,
- The height 22R of the bead filler is 30% or less of the tire cross-sectional height SR.
- The tread widht is 81% or more and 97% or less of the tire maximum width.
- The radius of curvature of the carcass layer on the extended line extending in the tread width direction through the tire maximum width position is 30 mm or more and 70 mm or less.
- The tire includes the reinforcing rubber layer.

The present invention has been disclosed through the embodiment of the present invention as in the foregoing, but the description and the drawing constituting part of the disclosure should not be considered to limit the present invention.

Alternative embodiments, examples, and operational techniques will be apparent to those skilled in the art from the disclosure. Therefore, the technical scope of the present invention is defined only by specific matters of the invention according to the claims.

### INDUSTRIAL APPLICABILITY

The tire according to the present invention is useful since the tire enhances the steering stability while inhibiting the deterioration of the rolling resistance.

## Claims

1. A tire (1) comprising:
a tread portion (5) in contact with a road surface;
a pair of bead portions (2) each including a bead core (21) and a bead filler (22);
sidewall portions (4) extending between the bead portions (2) and the tread portion (5);
a carcass layer (3) folded back around the bead cores (21) and extending in a toroidal shape between the bead portions (21);
a belt layer (6) arranged outwardly of the carcass layer (3) in a tire radial direction, the belt layer (6) reinforcing the tread portion (5); and
reinforcing layers (7) arranged adjacent to the carcass layer (3) on a tread widthwise outer or inner side of the carcass layer (3), the reinforcing layer (7) reinforcing the sidewall portion (4),
the carcass layer (3) including a body ply portion (31) extending from the tread portion (5) to the bead cores (21) and folded-back ply portions (32) each folded back around the corresponding bead core (21),
wherein an end portion (32WE) of each folded-back ply portion (32) extends beyond a tire maximum width height,
a height (22R) of the bead filler (22) is 30% or less of a tire cross-sectional height (SR),
a tire radial inner end portion (7IE) of each of the reinforcing layers (7) is positioned inwardly, in the tire radial direction (R), of a tire radial outer end portion (22OE) of the bead filler (22),
in a cross section taken along the tread width direction of the tire (1) and taken orthogonally to a tire circumferential direction, a maximum thickness (7T) of each of the reinforcing layers (7) is smaller than a maximum thickness (22T) of the bead filler (22),
a tread width (TW), a length of the tread portion (5) in the tread width direction, is 81% or more of a tire maximum width (SW), and
in the cross section taken along the tread width direction of the tire (1) and taken orthogonally to the tire circumferential direction, a radius of curvature of the carcass layer (3) on an extended line (FL1) extending in the tread width direction through a tire maximum width position (SWM) is in a range of 30 mm to 40 mm,
**characterized in that** the tread portion (5) includes:
a plurality of circumferential grooves,
land portions within a central region between shoulder circumferential grooves, and
a shoulder land portion positioned outwardly of an outermost shoulder circumferential groove,
wherein a lug groove included in the tread portion (5) is arranged in the shoulder land portion and the lug groove is configured not to open to the circumferential groove,
wherein the lug groove is not formed in land portions within a central area between the shoulder circumferential grooves, and
wherein a siping with a groove width of 1 mm or less is used in the land portions within the central region.

2. The tire (1) according to claim 1, wherein the tread width (TW) is 95% or less of the tire maximum width (SW).

3. The tire (1) according to claim 1 or 2, wherein
the carcass layer (3) includes one layer and formed of a plurality of cords inclined against the tread width direction, and
an inclination angle of the cords and the tread width direction is 20 degrees or less.

4. The tire (1) according to any of claims 1 to 3, wherein a length (Dl) in the tire radial direction (R) between the tire radial inner end portion (7IE) of each of the reinforcing layers (7) and the tire radial outer end portion (22OE) of the corresponding bead filler (22) is 10 mm or less.

5. The tire (1) according to any of claims 1 to 4, wherein the height (22R) of the bead filler (22) is 25% or less of the tire cross-sectional height (SR).

6. The tire (1) according to any of claims 1 to 5, wherein an end portion (32WE) of each of the folded-back plies (32) extends to a tire radial inner side of the belt layer (6) and arranged inwardly, in the tread width direction, of a tread widthwise end portion (6WE) of the belt layer (6).

7. The tire (1) according to any of claims 1 to 6, wherein a length of each of the reinforcing layers (7) in the tire radial direction (R) is less than 40% of the tire cross-sectional height (SR).

## Patentansprüche

1. Reifen (1), umfassend:
einen Laufflächenabschnitt (5), welcher mit der Straßenoberfläche in Kontakt steht;
ein Paar Wulstabschnitte (2), jeweils umfassend einen Wulstkern (21) und einen Wulstfüller (22);
Seitenwandabschnitte (4), welche sich zwischen den Wulstabschnitten (2) und dem Laufflächenabschnitt (5) erstrecken;
eine Karkassenschicht (3), welche um die Wulstkerne (21) umgefaltet ist und sich torusförmig zwischen den Wulstabschnitten (21) erstreckt;
eine Gürtelschicht (6), welche außerhalb der Karkassenschicht (3) in einer Reifenradialrichtung angeordnet ist, wobei die Gürtelschicht (6) den Laufflächenabschnitt (5) verstärkt; und
Verstärkungsschichten (7), welche an die Karkassenschicht (3) auf einer äußeren oder inneren Seite, in der Laufflächenbreitenrichtung, der Karkassenschicht (3), wobei die Verstärkungsschicht (7) den Seitenwandabschnitt (4) verstärkt,
wobei die Karkassenschicht (3) eine Körpereinlageschicht (31) umfasst, welche sich vom Laufflächenabschnitt (5) zu den Wulstkernen (21) erstreckt und umgefaltete Einlageabschnitte (32), welche jeweils um den entsprechenden Wulstkern (21) umgefaltet sind,
wobei ein Endabschnitt (32WE) jedes umgefalteten Einlageabschnitts (32) sich über eine maximale Reifenbreitenhöhe hinweg erstreckt,
wobei die Höhe (22R) des Wulstfüllers (22) 30% oder weniger der Reifenquerschnittshöhe (SR) beträgt,
wobei ein radial innerer Reifenendabschnitt (71E) jedes der Verstärkungsschichten (7) einwärts, in der Reifenradialrichtung (R), in Bezug auf einen radial äußeren Reifenendabschnitt (22OE) des Wulstfüllers angeordnet ist,
in einem Querschnitt entlang der Laufflächenbreitenrichtung des Reifens (1) und senkrecht zu einer Reifenumfangsrichtung, die maximale Dicke (7T) jeder Verstärkungsschicht (7) kleiner als eine maximale Dicke (22T) des Wulstfüllers (22) ist,
wobei eine Laufflächenbreite (TW), eine Länge des Laufflächenabschnitts (5) in der Laufflächenbreitenrichtung, 81% oder mehr einer maximalen Reifenbreite (SW) beträgt, und
im Querschnitt entlang der Laufflächenbreitenrichtung des Reifens (1) und senkrecht zur Reifenumfangsrichtung, ein Krümmungsradius der Karkassenschicht (3) auf einer verlängerten Linie (FL1), welche sich in der Laufflächenbreitenrichtung durch eine Position (SWM) einer maximalen Reifenbreite erstreckt, im Bereich zwischen 30 mm und 40 mm liegt,
**dadurch gekennzeichnet, dass** der Laufflächenabschnitt (5) umfasst:
eine Mehrzahl von Umfangsrillen,
Stegabschnitte innerhalb eines zentralen Bereichs zwischen den Schulterumfangsrillen und einem Schulterstegabschnitt, welcher auswärts in Bezug auf eine äußerste Schulterumfangsrille angeordnet ist,
wobei eine Stollenrille, welche in dem Laufflächenabschnitt (5) eingeschlossen ist, in dem Schulterstegabschnitt angeordnet ist und die Stollenrille konfiguriert ist, um sich nicht zur Umfangsrille zu öffnen,
wobei die Stollenrille nicht in Stegabschnitten innerhalb eines zentralen Bereichs zwischen den Schulterumfangsrillen gebildet ist, und
wobei eine Feinprofilierung mit einer Rillenbreite von 1 mm oder weniger in den Stegabschnitten innerhalb des zentralen Bereichs verwendet wird.

2. Reifen (1) nach Anspruch 1, wobei die Laufflächenbreite (TW) 95% oder weniger der maximalen Reifenbreite (SW) beträgt.

3. Reifen (1) nach Anspruch 1 oder 2, wobei
die Karkassenschicht (3) eine Schicht umfasst und aus einer Mehrzahl von Korden gebildet ist, welche gegenüber der Laufflächenbreitenrichtung geneigt sind, und
der Neigungswinkel zwischen den Korden und der Laufflächenbreitenrichtung 20 Grad oder weniger beträgt.

4. Reifen (1) nach einem der Ansprüche 1 bis 3, wobei die Länge (D1) in der Reifenradialrichtung (R) zwischen dem radial inneren Endabschnitt (7IE) jeder Verstärkungsschicht (7) und dem radial äußeren Endabschnitt (22OE) des entsprechenden Wulstfüllers (22) 10 mm oder weniger beträgt.

5. Reifen (1) nach einem der Ansprüche 1 bis 4, wobei die Höhe (22R) des Wulstfüllers (22) 25% oder weniger der Querschnittshöhe (SR) beträgt.

6. Reifen (1) nach einem der Ansprüche 1 bis 5, wobei ein Endabschnitt (32WE) jedes der umgefalteten Einlagen (32) sich zu einer radial inneren Reifenseite der Gürtelschicht (6) erstreckt und einwärts, in der Laufflächenbreitenrichtung, in Bezug auf einen Laufflächenendabschnitt (6WE), in der Breitenrichtung, der Gürtelschicht (6) angeordnet ist.

7. Reifen (1) nach einem der Ansprüche 1 bis 6, wobei eine Länge jeder Verstärkungsschicht (7) in der Reifenradialrichtung (R) weniger als 40% der Reifenquerschnittshöhe (SR) beträgt.

## Revendications

1. Bandage pneumatique (1), comprenant :
une partie de bande de roulement (5) en contact avec la surface d'une route ;
une paire de parties de talon (2) incluant chacune une tringle (21) et un bourrage sur tringle (22) ;
des parties de flanc (4) s'étendant entre les parties de talon (2) et la partie de bande de roulement (5) ;
une nappe de carcasse (3) repliée vers l'arrière autour des tringles (21) et s'étendant en une forme toroïdale entre les parties de talon (21) ;
une couche de ceinture (6) agencée vers l'extérieur de la nappe de carcasse (3), dans une direction radiale du bandage pneumatique, la couche de ceinture (6) renforçant la partie de bande de roulement (5) ; et
des couches de renforcement (7) agencées près de la nappe de carcasse, sur un côté externe ou interne, dans le sens de la largeur de la bande de roulement, de la nappe de carcasse (3), les couches de renforcement (7) renforçant la partie de flanc (4) ;
la nappe de carcasse (3) incluant une partie de nappe de corps (31) s'étendant de la partie de bande de roulement (5) vers les tringles (2) et des parties de nappe repliées vers l'arrière (32), chacune étant repliée vers l'arrière autour de la tringle correspondante (21) ;
dans lequel une partie d'extrémité (32WE) de chaque partie de nappe repliée (32) s'étend au-delà de la hauteur de largeur maximale du bandage pneumatique ;
une hauteur (22R) du bourrage sur tringle (22) représente 30% ou moins de la hauteur de section transversale du bandage pneumatique (SR) ;
une partie d'extrémité interne, dans la direction radiale du bandage pneumatique (7IE), de chacune des couches de renforcement (7) est positionnée vers l'intérieur, dans la direction radiale du bandage pneumatique (R), d'une partie d'extrémité externe, dans la direction radiale du bandage pneumatique (22OE), du bourrage sur tringle (22) ;
dans une section transversale, prise le long de la direction de la largeur de la bande de roulement, du bandage pneumatique (1), et prise de manière orthogonale à une direction circonférentielle du bandage pneumatique, une épaisseur maximale (7T) de chacune des couches de renforcement (7) est inférieure à une épaisseur maximale (22T) du bourrage sur tringle (22) ;
une largeur de la bande de roulement (TW), une longueur de la partie de bande de roulement (5), dans la direction de la largeur de la bande de roulement, représente 81% ou plus d'une largeur maximale du bandage pneumatique (SW) ; et
dans la section transversale, prise le long de la direction de la largeur de la bande de roulement, du bandage neumatique (1), et prise de manière orthogonale à la direction circonférentielle du bandage pneumatique, un rayon de courbure de la nappe de carcasse (3), sur une ligne externe (FL1) s'étendant dans la direction de la largeur de la bande de roulement, à travers une position à largeur maximale du bandage pneumatique (SWM), est comprise dans un intervalle allant de 30 mm à 40 mm ;
**caractérisé en ce que** :
la partie de bande de roulement (5) inclut :
plusieurs rainures circonférentielles et
des parties d'appui dans une région centrale entre des rainures d'épaulement circonférentielles, et une partie d'appui d'épaulement positionnée vers l'extérieur d'une rainure d'épaulement circonférentielle externe extrême ;
dans lequel une rainure de barrette incluse dans la partie de bande de roulement (5) est agencée dans la partie d'appui d'épaulement, la rainure de barrette étant configurée de sorte à ne pas s'ouvrir vers la rainure circonférentielle ;
dans lequel la rainure de barrette n'est pas formée dans des parties d'appui situées dans une région centrale entre les rainures circonférentielles d'épaulement ; et
dans lequel la lamelle, avec une largeur de rainure de 1 mm ou moins, est utilisée dans les parties d'appui situées dans la région centrale.

2. Bandage pneumatique (1) selon la revendication 1, dans lequel la largeur de la bande de roulement (TW) fait 95% ou moins de la largeur maximale du bandage pneumatique (SW).

3. Bandage pneumatique selon les revendications 1 ou 2, dans lequel :
la nappe de carcasse (3) inclut une nappe et comprend plusieurs câblés inclinés contre la direction de la largeur de la bande de roulement ; et
un angle d'inclinaison des câblés par rapport à la direction de la largeur de la bande de roulement correspond à 20 degrés ou moins.

4. Bandage pneumatique (1) selon l'une quelconque des revendications 1 à 3, dans lequel une longueur (D1), dans la direction radiale du bandage pneumatique (R), entre la partie d'extrémité interne, dans la direction radiale du bandage pneumatique (7IE), de chacune des couches de renforcement (7) et la partie d'extrémité externe, dans la direction radiale du bandage pneumatique (22OE), du bourrage sur tringle correspondant (22) est de 10 mm ou moins.

5. Bandage pneumatique (1) selon l'une quelconque des revendications 1 à 4, dans lequel la hauteur (22R) du bourrage sur tringle (22) est de 25% ou moins de la hauteur de section transversale du bandage pneumatique (SR).

6. Bandage pneumatique (1) selon l'une quelconque des revendications 1 à 5, dans lequel une partie d'extrémité (32WE) de chacune des nappes repliées vers l'arrière (32) s'étend vers un côté radialement interne de la couche de ceinture (6) et est agencée vers l'intérieur, dans la direction de la largeur de la bande de roulement, d'une partie d'extrémité, dans le sens de la largeur de la bande de roulement (6WE), de la couche de ceinture (6).

7. Bandage pneumatique (1) selon l'une quelconque des revendications 1 à 6, dans lequel une longueur de chacune des couches de renforcement (7), dans la direction radiale du bandage pneumatique (R) fait moins de 40% de la hauteur de section transversale du bandage pneumatique (SR).
